# EUROPEAN PATENT SPECIFICATION

(11) **EP 2 647 571 B1**
(45) Date of publication and mention of the grant of the patent: **11.01.2017**
(21) Application number: 12163190.7
(22) Date of filing: 04.04.2012
(51) Int. Cl.: B64D 13/06, B64D 13/08

(54) **Method for controlling an aircraft air conditioning system during maintenance**
Verfahren zur Steuerung einer Flugzeugklimaanlage während der Wartung
Procédé pour commander un système de conditionnement d'air pour aéronef pendant l'entretien

(43) Date of publication of application: 09.10.2013
(73) Proprietor: Airbus Operations GmbH, 21129 Hamburg (DE)
(72) Inventor: Kelnhofer, Jürgen, Dipl.-Ing., 21129 Hamburg (DE); Krakowski, Dariusz, Dipl.-Ing., 21129 Hamburg (DE)
(74) Representative: Schicker, Silvia

(56) References cited:
- WO-A1-2005/063573
- WO-A1-2007/087974
- US-A- 5 695 396
- US-A1- 2005 051 668
- US-B1- 6 306 032

## Description

The present invention relates to a method for controlling an aircraft air conditioning system during a predetermined operational phase of the aircraft, in particular during maintenance, and to an aircraft air conditioning system.

So-called air-based air conditioning systems, as described for example in DE 10 2008 053 320 A1 or non-published DE 10 2010 054 448, are usually used at present in commercial aircraft to air-condition the aircraft cabin. An aircraft air conditioning system serves to cool the aircraft cabin, which would otherwise be overheated due to thermal loads, such as, for example, body heat of the passengers and waste heat from equipment present on board the aircraft. The aircraft air conditioning system in addition adequately supplies fresh air into the aircraft cabin to ensure that a prescribed minimum proportion of oxygen is present in the aircraft cabin.

Air-based air conditioning systems typically comprise an air conditioning unit, which is arranged, for example, in a wing root of the aircraft, and which is supplied with compressed process air that is generated by a compressor or bled of from an engine or an auxiliary power unit (APU) of the aircraft. During flight operation of the aircraft, usually engine bleed air is used so as to supply the air conditioning unit of the aircraft air conditioning system with compressed process air. During ground operation of the aircraft the air conditioning unit of the aircraft air conditioning system, however, typically is supplied with compressed process air from the auxiliary power unit of the aircraft. In the air conditioning unit, the process air, upon flowing through at least one heat exchanger as well as through various compression and expansion units, is cooled and expanded. Cooled process air exiting the air conditioning unit finally is supplied to a mixing chamber where it is mixed with recirculation recirculated from an aircraft region to be air conditioned. The mixed air from the mixing chamber, via respective mixed air lines, is supplied to the aircraft region to be air conditioned which may be divided into a plurality of air conditioning zones.

US 5,695,396 discloses a ventilating system for reducing contaminations in the air of an aircraft. The supply of fresh or mixed air to the respective air openings or the withdrawal of used air depends on the open or closed position of the valves. When the valves are closed and the valves are opened, which is typical for a smoking section, the same cabin space can be converted into a non-smoking section by closing valve and opening valve, thereby supplying additional fresh air or mixed air into the cabin.

WO 2005/063573 A1 discloses a device for air conditioning a freight compartment or a cabin of an aircraft. According to document WO 2005/063573 A1, temperature-controlled air is blown from a first line branching through pipes extending in the longitudinal direction of the cabin, into the freight compartment or the cabin. Further, temperature-controlled air can be conveyed through a second line branching and blown through pipes into the freight compartment and/or the cabin, wherein the pipes in the floor region extend in longitudinal direction of the cabin. If the cabin has to be cooled, air is blown in through pipes remote from the passengers.

US 2005/0051668 A1 discloses an aircraft air conditioning system. Air flows through an inside air supply to the interior section. The interior section may be one of several sections of the pressurized volume of the aircraft. These sections include the flight deck, the cabin, crew rests, lavatories and the galleys. In the first interior section, the inside air may absorb heat from a first object, thereby controlling the temperature of the first object. Further, a second interior section can be provided. The second interior section may be a cargo bay of the aircraft, a galley chiller or an electronic equipment rack. The second interior section is cooled by recirculation air.

WO 2007/087974 A1 discloses an air conditioning arrangement, which supplies climate zones with a temperature-controlled air supply via an air supply feed path system. The feed path system comprises a main branching system with a mixing chamber and a plurality of sub-branching systems branching off from the mixing chamber, each being associated with one of climate zones. Further, an individual temperature controlled hot air conduit system is provided. The hot air is advanced via the individual temperature control hot air conduit system connected to the main branching system of the air supply feed path system upstream of air conditioning units and can, in each case, be introduced, metered via an individual regulating valve, into the associated sub-branching system of each of the climate zones.

US 6,306,032 B1 discloses an air-conditioning system for below-deck areas of a passenger aircraft. The system comprises an air mixer unit, a supply air unit, an exhaust air unit and an exhaust air blower, as well as a trimming air unit. The supply air unit is connected to the downstream end of a first supply air main line and serves to the control supply of temperated mixed air, which is provided from the air mixer unit through the first supply air main line into a first air below deck space. A starewell is provided with air via an air main line.

The invention is directed at the object of specifying a method for controlling an aircraft air conditioning system that during a predetermined operational phase of the aircraft, namely during maintenance, allows a particularly energy efficient operation of the aircraft air conditioning system. Further, the invention is directed at CPA07799 the object of providing an aircraft air condition system that during a predetermined operational phase of the aircraft, namely during maintenance, may be operated in a particularly energy-efficient manner.

This object is achieved by a method for controlling an aircraft air conditioning system having the features of Claim 1 and an aircraft air conditioning system having the features of Claim 8.

In a method, according to the invention, for controlling an aircraft air conditioning system, during normal operation of the aircraft, the supply of conditioned air from the aircraft air conditioning system to an aircraft region to be air conditioned is controlled such that the conditioned air is evenly distributed in the aircraft region to be air conditioned. The aircraft region to be air conditioned is, according to the invention, a passenger cabin or a cockpit.

Specifically, the expression "normal operation of the aircraft" in the context of the present application designates an operational state of the aircraft, wherein heat has to be dissipated from heat sources that are substantially evenly distributed in the aircraft region to be air conditioned. In case the aircraft region to be air conditioned is a passenger cabin of the aircraft, the expression "normal operation of the aircraft", for example, designates an operational state of the aircraft wherein the passenger cabin is occupied with passengers.

When the conditioned air, during normal operation of the aircraft, is evenly distributed in the aircraft region to be air conditioned, the aircraft region to be air conditioned is evenly heated or cooled, as desired. In particular, a substantially even temperature distribution in the aircraft region to be air conditioned is achieved. During normal operation of the aircraft, an even distribution of conditioned air in the aircraft region to be air conditioned provides comfortable conditions in the aircraft region to be air conditioned, while simultaneously ensuring a sufficient dissipation of heat from thermal loads present in the aircraft region to be air conditioned.

During a predetermined operational phase of the aircraft, the supply of conditioned air from the aircraft air conditioning system to the aircraft region to be air conditioned is controlled such that the distribution of the conditioned air is concentrated to a selected portion of the aircraft region to be air conditioned. In other words, during the predetermined operational phase of the aircraft, the supply of conditioned air from the aircraft air conditioning system to the aircraft region to be air conditioned is controlled such that the conditioned air is no longer evenly distributed in the aircraft region to be air conditioned, but concentrated to the selected portion of the aircraft region to be air conditioned. Of course, in particular since the selected portion of the aircraft region to be air conditioned and a remaining portion of the aircraft region to be air conditioned may not be physically separated from each other also during the predetermined operational phase of the aircraft, the supply of conditioned air may not be exclusively limited to the selected portion of the aircraft region to be air conditioned. Instead, a limited flow of conditioned air may also enter the remaining portion of the aircraft region to be air conditioned.

However, during the predetermined operational phase of the aircraft a significant concentration of conditioned air in the selected portion of the aircraft region to be air conditioned is achieved by appropriately controlling the supply of the conditioned air into the aircraft region to be air conditioned. The concentration of the distribution of conditioned air to the selected portion of the aircraft region to be air conditioned may be detected, for example, by supplying visible smoke together with the conditioned air of instead of the conditioned air into the aircraft region to be air conditioned. Further, measurements of the temperature distribution in the aircraft region to be air conditioned may be used to verify the concentration of the distribution of conditioned air to the selected portion of the aircraft region to be air conditioned.

The method for controlling an aircraft air conditioning system, during normal operation of the aircraft allows a high air conditioning comfort to be achieved in the entire aircraft region to be air conditioned. During the predetermined operational phase of the aircraft, the air conditioning performance of the aircraft air conditioning system is concentrated to the selected portion of the aircraft region to be air conditioned. Preferably, the selected portion of the aircraft region to be air conditioned is a portion of the aircraft region to be air conditioned which during the predetermined operational phase has a higher air conditioning demand than the remaining portion of the aircraft region to be air conditioned.

Hence, during the predetermined operational phase of the aircraft, the air conditioning demand required to be provided by the aircraft air conditioning system can be reduced as compared to the air conditioning demand required to be provided by the aircraft air conditioning system during normal operation of the aircraft, while still ensuring that the selected portion of the aircraft region to be air conditioned is sufficiently air conditioned. As a result, the performance requirements placed on a compressed air source, such as e.g. an engine or an auxiliary power unit of the aircraft, which supplies compressed air to an air conditioning unit of the aircraft air conditioning system can be reduced. Hence, fuel consumption and wear of the compressed air source can be reduced

Basically, the predetermined operational phase of the aircraft may be any operational phase of the aircraft during which it is not necessary or not desired to evenly air condition the entire aircraft region to be air conditioned. According to the invention, the predetermined operational phase of the aircraft is a maintenance operational phase of the aircraft during which maintenance or service work may be performed or the aircraft may be cleaned. During a maintenance operational phase of the aircraft the air conditioning requirement typically is concentrated to only selected portions of the aircraft region to be air conditioned. Specifically, during a maintenance operational phase of the aircraft, the air conditioning requirement typically is limited to an aisle region of the aircraft region to be air conditioned. The selected portion of the aircraft region to be air conditioned thus comprises an aisle region of the cockpit or passenger cabin, according to the invention.

The control of the supply of conditioned air from the aircraft air conditioning system to the aircraft region to be air conditioned during the predetermined operational phase of the aircraft may be initiated in response to a signal indicative of the start of the predetermined operational phase of the aircraft. The signal indicative of the start of the predetermined operational phase of the aircraft may be a signal that is output to the aircraft air conditioning system in response to a manual input by a user. For example, the maintenance or cleaning crew may operate a switch so as to induce the output of a signal to the aircraft air conditioning system which indicates the start of a maintenance operational phase of the aircraft. Alternatively or additionally thereto, selected operating parameters of the aircraft may be monitored so as to determine, e.g. by means of a suitable software logic, whether the predetermined operational phase of the aircraft has started. Suitable operating parameters of the aircraft which may be used for determining whether the predetermined operational phase of the aircraft has started, are, e.g., parameters indicating a ground operation of the aircraft while a passenger cabin of the aircraft is not occupied with passengers.

In the method for controlling an aircraft air conditioning system conditioned air preferably is supplied to the aircraft region to be air conditioned via air inlets which are arranged in a ceiling region of the aircraft region to be air conditioned. Preferably, the air inlets are adapted to eject conditioned air substantially in a direction of a central region of the aircraft region to be air conditioned. For example the air inlets may be arranged in a ceiling region of an aircraft passenger cabin along a longitudinal axis of the aircraft passenger cabin. The air inlets may be adapted to eject conditioned air substantially in a direction of an aisle region of the aircraft region to be air conditioned and/or a direction of a portion of the aircraft region to be air conditioned which is disposed above rows of passenger seats arranged in the aircraft passenger cabin.

Air may be discharged from the aircraft region to be air conditioned via air outlets which are arranged in a floor region of the aircraft region to be air conditioned. The air outlets may be provided directly in a floor of the aircraft region to be air conditioned or in portion of side walls of the aircraft region to be air conditioned which is disposed adjacent to a floor of the aircraft region to be air conditioned. Basically, the concentration of the distribution of the conditioned air to the selected portion of the aircraft region to be air conditioned, during the predetermined operational phase of the aircraft, may be achieved by suitably controlling the air inlets through which conditioned air is supplied to the aircraft region to be air conditioned. For example, the air inlets could be controlled such that only selected air inlets eject conditioned air into the aircraft region to be air conditioned.

According to the invention, the distribution of conditioned air in the aircraft region to be air conditioned is controlled by appropriately controlling the speed at which the conditioned air is supplied to the aircraft region to be air conditioned through the air inlets.

During normal operation of the aircraft the conditioned air preferably is supplied to the aircraft region to be air conditioned with a high impulse and at a high speed. Owing to the high impulse and the high speed of the conditioned air, tumble air movements form in the aircraft region to be air conditioned which ensure a virtual homogeneous intermixing of the conditioned air with the ambient air, wherein free convection induced by heat sources and cold or hot surfaces is dominated by the forced flow of the tumble air movements. Due to the tumble air movements the conditioned air is evenly distributed in the aircraft region to be air conditioned. This operating principle of an aircraft air conditioning system involving the formation of forced tumble air movements is also known as the so-called mixed ventilation principle. Specifically, conditioned air which is blown into an aircraft passenger cabin through air inlets which are arranged in a ceiling region of the aircraft is evenly distributed in an aisle region and also a passenger seat region of the aircraft passenger cabin.

By reducing the speed and thus the impulse of the air blown into the aircraft region to be air conditioned through the air inlets, the formation of tumble air movements which provide for an even distribution of the conditioned air in the aircraft region to be air conditioned is limited or even prevented. Hence, the distribution of the air supplied to the aircraft region to be air conditioned is concentrated to a selected portion of the aircraft region to be air conditioned, for example an aisle region of an aircraft passenger cabin.

During normal operation of the aircraft conditioned air preferably is supplied to the aircraft region to be air conditioned at a speed of approx. 1.5 to 2.5 m/s and with a high impulse so as to ensure the formation of tumble air movements which provide for an even distribution of the conditioned air in the aircraft region to be air conditioned. The injection speed of the conditioned air may vary in dependence on a distance of an air inlet through which conditioned air is injected into the aircraft region to be air conditioned from a passenger seat. In particular, the injection speed of the conditioned air should be the lower, the closer an air inlet through which the conditioned air is injected is disposed to a passenger seat so as to ensure that the air conditioning comfort of a passenger sitting on the passenger seat is not affected.

During the predetermined operational phase of the aircraft conditioned air may be supplied to the aircraft region to be air conditioned at a speed of approx. 0.5 to 1.0 m/s and with a lower impulse. By injecting the conditioned air into the aircraft region to be air conditioned at that reduced speed, the formation of tumble air movements is limited or prevented such that the distribution of the conditioned air is concentrated to the selected portion of the aircraft region to be air conditioned.

Further, if desired, the distribution of the conditioned air in the aircraft region to be air conditioned may be controlled by appropriately controlling an injection angle at which the conditioned air is injected into the aircraft region to be air conditioned. The injection angle of the conditioned air may, e.g., be controlled by appropriately controlling a position and orientation of the air inlets through which the conditioned air is supplied to the aircraft region to be air conditioned. For example, if the distribution of the conditioned air should be concentrated to an aisle region of an aircraft passenger cabin, the injection angle of the conditioned air may be controlled such that the conditioned air is injected in the direction of the aisle region of the passenger cabin.

Further, during the predetermined operational phase of the aircraft, a lower amount of conditioned air may be supplied to the aircraft region to be air conditioned than during normal operation of the aircraft. A reduction of the amount of conditioned air supplied to the aircraft region to be air conditioned may be achieved, e.g., by reducing an amount of recirculation air supplied to a mixing chamber of the aircraft air conditioning system from the aircraft region to be air conditioned, e.g., by appropriately reducing the speed of recirculation fans conveying recirculation air from the aircraft region to be air conditioned to the mixing chamber of the aircraft air conditioning system. Alternatively or additionally thereto, the amount of fresh air provided by an air conditioning unit of the air conditioning system to the mixing chamber may be reduced.

Further, during the predetermined operational phase of the aircraft, conditioned air may be supplied to the aircraft region to be air conditioned at a lower temperature than during normal operation of the aircraft. This may be achieved, e.g., by reducing the percentage of typically relatively warm recirculation air in the mixing chamber of the aircraft air conditioning system. Alternatively or additionally thereto, a temperature of the fresh air supplied to the mixing chamber from the air conditioning unit of the aircraft air conditioning system may be reduced. During normal operation of the aircraft the temperature of the conditioned air supplied to the aircraft region to be air conditioned should not fall below a predetermined threshold value so as to ensure a high air conditioning comfort in the aircraft region to be air conditioned. During a maintenance operational phase of the aircraft it is, however, not necessary that these comfort requirements are met. Therefore, it is possible to more efficiently use the cooling performance capacity of the air conditioning unit of the aircraft air conditioning system, while simultaneously keeping the demand of compressed air to be provided by the compressed air source low.

During the predetermined operational phase of the aircraft the supply of conditioned air to the aircraft region to be air conditioned may be controlled in dependence on the air conditioning state in the selected portion of the aircraft region to be air conditioned. For example, signals provided by suitable sensors, such as temperature sensors or pressure sensors disposed in the selected portion of the aircraft region to be air conditioned, may be used upon controlling the supply of conditioned air to the aircraft region to be air conditioned. This allows a reliable control of the air conditioning state in the selected portion of the aircraft region to be air conditioned. An aircraft air conditioning system, according to the invention, comprises a control unit which is adapted to, during normal operation of the aircraft, control the supply of conditioned air from the aircraft air conditioning system to an aircraft region to be air conditioned such that the conditioned air is evenly distributed in the aircraft region to be air conditioned and, during a predetermined operational phase of the aircraft, control the supply of conditioned air from the aircraft air conditioning system to the aircraft region to be air conditioned such that the distribution of the conditioned air is concentrated to a selected portion of the aircraft region to be air conditioned.

According to the invention, the predetermined operational phase of the aircraft is a maintenance operational phase of the aircraft, and the selected portion of the aircraft region to be air conditioned is an aisle region of a cockpit or passenger cabin.

The control unit may be adapted to initiate the control of the supply of conditioned air from the aircraft air conditioning system to the aircraft region to be air conditioned during the predetermined operational phase of the aircraft in response to a signal indicative of the start of the predetermined operational phase of the aircraft. The signal indicative of the start of the predetermined operational phase of the aircraft may be output to the aircraft air conditioning system in response to a manual input by a user. Alternatively or additionally thereto, the signal indicative of the start of the predetermined operational phase of the aircraft may be output to the aircraft air conditioning system in response to the detection of selected operating parameters of the aircraft.

The aircraft air conditioning system preferably further comprises air inlets for supplying conditioned air to the aircraft region to be air conditioned. The air inlets may be arranged in a ceiling region of the aircraft region to be air conditioned. Further, the air inlets may be adapted to eject conditioned air substantially in a direction of a central region of the aircraft region to be air conditioned.

Further, the aircraft air conditioning system may comprise air outlets for discharging air from the aircraft region to be air conditioned. The air outlets may be arranged in a floor region of the aircraft region to be air conditioned.

According ot the invention, the control unit is adapted to control the supply of conditioned air to the aircraft region to be air conditioned such that, during the predetermined operational phase of the aircraft, the conditioned air is supplied to the aircraft region to be air conditioned at a lower speed than during normal operation of the aircraft.

In particular, the control unit may be adapted to control the supply of conditioned air to the aircraft region to be air conditioned such that, during normal operation of the aircraft, conditioned air is supplied to the aircraft region to be air conditioned at a speed of approx. 1.5 to 2.5 m/s, and such that, during the predetermined operational phase of the aircraft, conditioned air is supplied to the aircraft region to be air conditioned at a speed of approx. 0.5 to 1.5 m/s.

The control unit may be adapted to control the supply of conditioned air to the aircraft region to be air conditioned such that during the predetermined operational phase of the aircraft, a lower amount of conditioned air is supplied to the aircraft region to be air conditioned than during normal operation of the aircraft.

Further, the control unit may be adapted to control the supply of conditioned air to the aircraft region to be air conditioned such that, during the predetermined operational phase of the aircraft, conditioned air is supplied to the aircraft region to be air conditioned at a lower temperature than during normal operation of the aircraft.

Finally, the control unit may be adapted to control the supply of conditioned air to the aircraft region to be air conditioned, during the predetermined operational phase of the aircraft, in dependence on the air conditioning state in the selected portion of the aircraft region to be air conditioned.

A preferred embodiment of the invention in the following will be described in more detail with reference to the appended schematic drawings, in which
- Figure 1: shows an aircraft air conditioning system which is supplied with compressed fresh air by means of an auxiliary power unit,
- Figure 2: shows a detail of the aircraft air conditioning system according to Figure 1,
- Figure 3: shows an air distribution system of the aircraft air conditioning system according to Figure 1,
- Figure 4: shows the distribution of conditioned air which is provided by the aircraft air conditioning system according to Figure 1 and injected into an aircraft passenger cabin during normal operation of the aircraft, and
- Figure 5: shows the distribution of conditioned air which is provided by the aircraft air conditioning system according to Figure 1 and injected into an aircraft passenger cabin during normal operation of the aircraft

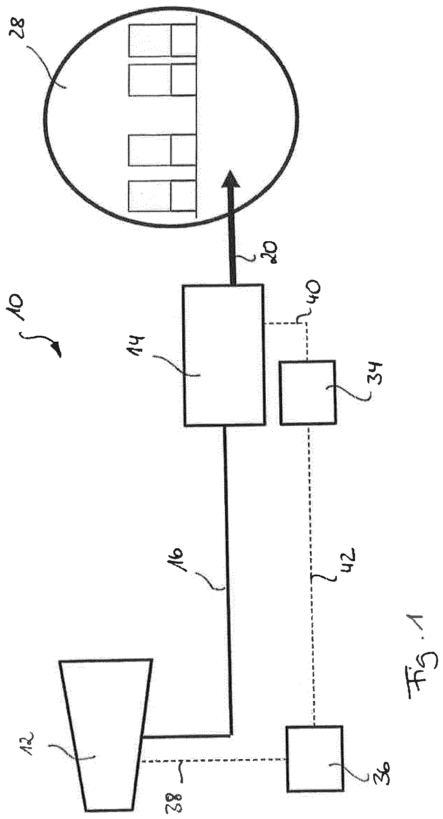

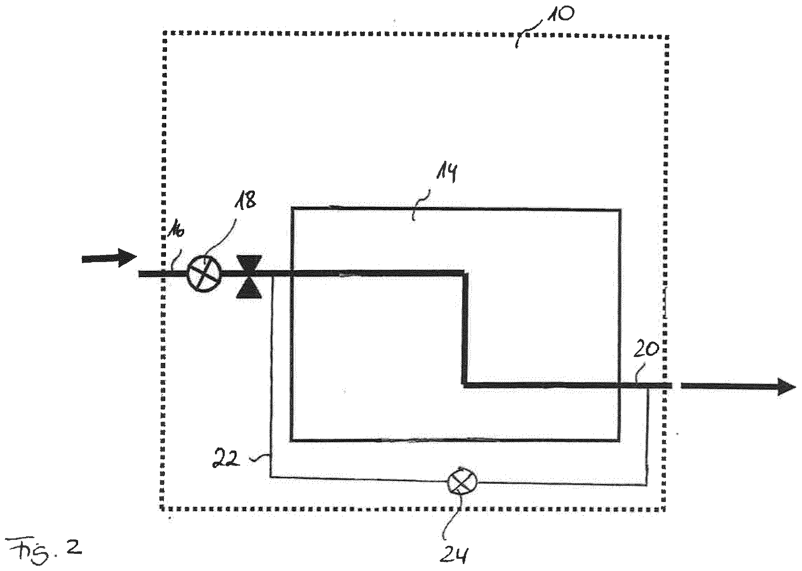

Figure 1 shows an aircraft air conditioning system 10, which, during ground operation of the aircraft, is supplied with compressed process air from an auxiliary power unit 1. The compressed air generated by the auxiliary power unit 12 is supplied to the aircraft air conditioning system 10, specifically an air conditioning unit 14 of the air conditioning 10 via a line 16. As becomes apparent from Figure 2, a valve 18 is disposed in the line 16 which controls the supply of compressed process air into the air conditioning unit 14 of the aircraft air conditioning system 10. In the air conditioning unit 14 the process air, upon flowing through at least one heat exchanger and upon flowing through various compression and expansion units, is cooled and expanded.

Cool process air exits the air conditioning unit 14 via a further line 20. A bypass line 22 branches off from the line 16 upstream of the air conditioning unit 14 and opens into the line 20 downstream of the air conditioning unit 14. A bypass valve 24 is disposed in the bypass line 22. Hot process air bled off the auxiliary power unit 12, via the bypass line 22, may bypass the air conditioning unit 14 and may be mixed with the cool air exiting the air conditioning unit 14 downstream of the air conditioning unit 14. Thus, by appropriately controlling the bypass valve 14, the temperature of the process air at the exit of the air conditioning unit 14 may be controlled as desired.

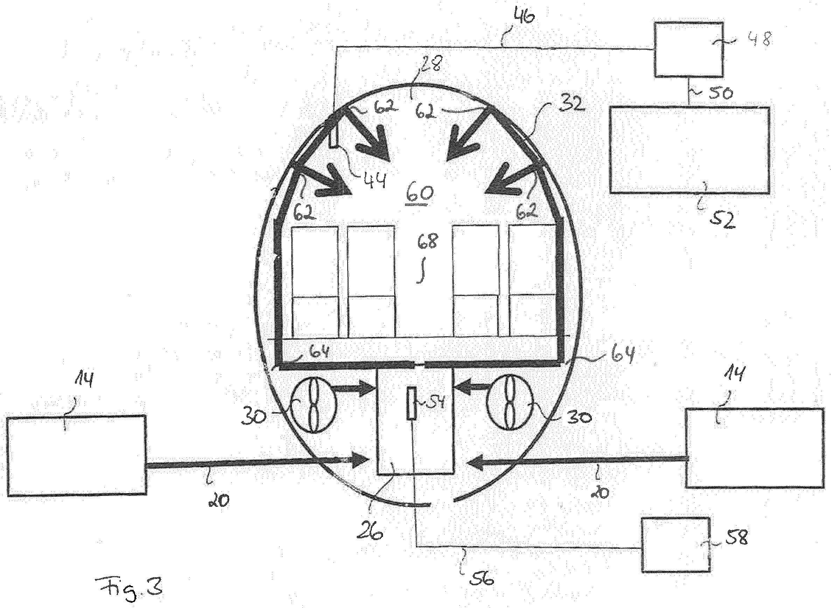

As depicted in Figure 3, via the further line 20, compressed air, which may be a mixture of air cooled and expanded by the air conditioning unit 14 and hot compressed air which is supplied to the air cooled in the air conditioning unit 14 via the bypass line 22, is guided into a mixing chamber 26. In the mixing chamber 26 the compressed air is mixed with recirculation air discharged from an aircraft region 28 to be air conditioned by means of recirculation fans 30. Mixed air from the mixing chamber 26 finally is supplied to the aircraft region 28 to be air conditioned via an air distribution system 32.

The operation of the aircraft air conditioning system 10 is controlled by means of an electronic control unit 34. An electronic control unit 36 serves to control the operation of the auxiliary power unit 12. A first signal line 38 connects the control unit 36 for controlling the auxiliary power unit 12 to the auxiliary power unit 12. A second signal line 40 connects the electronic control unit 34 for controlling the air conditioning system 10 to the air conditioning unit 14. Further, the electronic control unit 34 is connected to the recirculation fans 30 and adapted to control the operation of the recirculation fans 30. Moreover, the electronic control unit 34 is connected to the bypass valve 24 and adapted to control the operation of the bypass valve 24. Finally, the control units 34, 36 communicate with each other via a third signal line 42.

As becomes apparent from Figure 3, a temperature sensor 44 is disposed in the aircraft region 28 to be air conditioned, which, via a fourth signal line 46, provides signals indicative of the actual temperature in the aircraft region 28 to be air conditioned to an electronic control unit 48. The electronic control unit 48, via a fifth signal line 50, is connected to an input device 52. Upon start-up of the aircraft air conditioning system 10 the electronic control unit 48 determines a heating or cooling demand of the aircraft region 28 to be air conditioned. For determining the heating or cooling demand of the aircraft region 28 to be air conditioned, the electronic control unit 48 may, for example, compare an actual temperature in the aircraft region 28 to be air conditioned with a set temperature in the aircraft region 28 to be air conditioned. The actual temperature in the aircraft region 28 to be air conditioned may be measured by means of the temperature sensor 44 which is disposed in the aircraft region 28 to be air conditioned. The set temperature in the aircraft region 28 to be air conditioned may, for example, be input by a user via the input device 52 or may be stored in a storage device of the electronic control unit 48.

A further temperature sensor 54 is disposed in the mixing chamber 26 of the air conditioning system 10. A sixth signal line 46 connects the temperature sensor to an electronic control unit 58. Based on the heating or cooling demand of the aircraft region 28 to be air conditioned, which is communicated to the electronic control unit 58, the electronic control unit 58 determines a set temperature of the mixed air in the mixing chamber 26. Further, the electronic control unit 58 compares the set temperature of the mixed air in the mixing chamber 26 with the actual temperature of the mixed air in the mixing chamber 26 which is measured by means of the temperature sensor 54.

The electronic control unit 48 and the electronic control 58 both communicate with the electronic control unit 34 of the air conditioning system 10. Based on the data provided by the electronic control units 48, 58, the electronic control unit 34 controls the operation of the air conditioning unit 14 and thus the temperature and the volume flow of cool air exiting the air conditioning unit 14. Further, the electronic control unit 34 controls the bypass valve 24 and thus the supply of hot compressed air to the cool air exiting the air conditioning unit 14. Finally, the electronic control unit 34 controls the operation of the recirculation fans 30 and thus the volume flow of recirculation air conveyed by the recirculation fans 30 from the aircraft region 28 to be air conditioned into the mixing chamber 26. The electronic control unit 34, via the third signal line 42, communicates with the electronic control unit 36 of the auxiliary power unit 12 which controls the operation of the auxiliary power unit 12 in dependence on the data provided by the electronic control unit 34 of the air conditioning system 10.

It should be noted that the above described distribution of control tasks to different electronic control units is merely an example of how the air conditioning system 10 and the auxiliary power unit 12 may be controlled. It is, of course, also conceivable to use a smaller number of control units or only one control unit for implementing the control strategies which will be described in more detail in the following. Further, instead of signal lines, wireless data transmission may be employed.

In the exemplary embodiment described herein, the aircraft region 28 to be air conditioned by means of the air conditioning system 10 comprises a passenger cabin 60. Conditioned air from the mixing chamber 26 of the air conditioning system 10, via the air distribution system 32, is injected into the passenger cabin 60 through air inlets 62 which are arranged in a ceiling region of the passenger cabin 60. As becomes apparent from Figures 3 to 5, the air inlets 62 eject the conditioned air substantially in a direction of a central region of the passenger cabin 60. By means of the recirculation fans 30, air is discharged from the passenger cabin 60 via air outlets 64 which are arranged in a floor region of the passenger cabin 60.

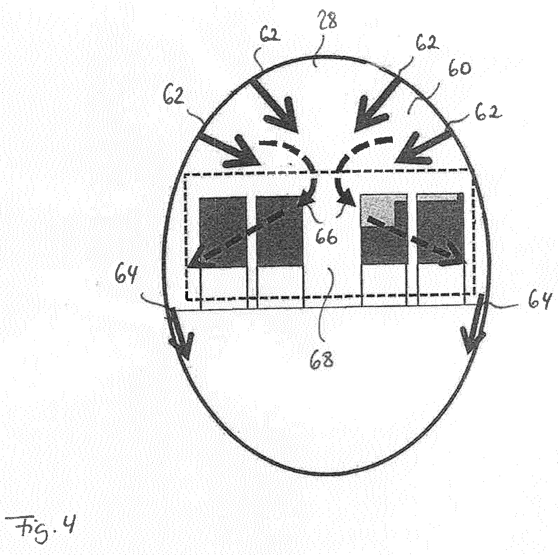

During normal operation of the aircraft, i.e. during operational phases of the aircraft during which the passenger cabin 60 is occupied with passengers, the supply of conditioned air from the aircraft air conditioning system 10 to the passenger cabin 60, by means of the control unit 34, is controlled such that the conditioned air is evenly distributed in the passenger cabin 60, see Figure 4. Specifically, the conditioned air is supplied from the mixing chamber 26 of the air conditioning system 10 to the passenger cabin 60 via the air inlets 62 at a high speed of approx. 1.5 to 2.5 m/s and thus with a high impulse. As a result, tumble air movements 66 form in the passenger cabin 60 which ensure a virtual homogeneous intermixing of the conditioned air with the ambient air, wherein free convection induced by heat sources and cold or hot surfaces is dominated by the forced flow of the tumble air movements 66. Due to the tumble air movements 66 the conditioned air is evenly distributed in the aircraft region to be air conditioned.

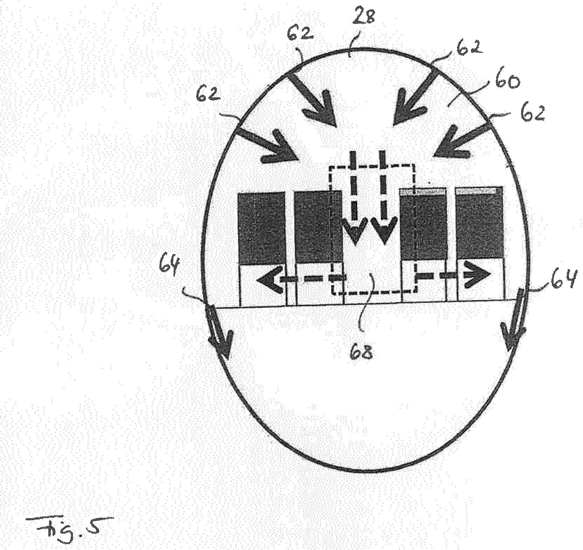

By contrast, during a maintenance operational phase of the aircraft during which maintenance or service work may be performed or the aircraft may be cleaned, the supply of conditioned air from the aircraft air conditioning system 10 to the passenger cabin 60 is controlled by the control unit 34 such that the distribution of the conditioned air is concentrated to a selected portion of the passenger cabin 60 in which the major part of the maintenance of service work or the cleaning takes place, see Figure 5. Specifically, during the maintenance operational phase of the aircraft, the supply of conditioned air from the aircraft air conditioning system 10 to the passenger cabin 60 is controlled such that the conditioned air is no longer evenly distributed in the passenger cabin 60, but concentrated to an aisle region 68 of the passenger cabin 60. Hence, during the maintenance operational phase of the aircraft, the air conditioning demand required to be provided by the aircraft air conditioning system 10 can be reduced as compared to the air conditioning demand required to be provided by the aircraft air conditioning system 10 during normal operation of the aircraft, while still ensuring that the aisle region 68 of the passenger cabin 60, the major working environment for maintenance workers or cleaning staff, is sufficiently air conditioned.

The control unit 34 initiates the control of the supply of conditioned air from the aircraft air conditioning system 10 to the passenger during the maintenance operational phase of the aircraft according to Figure 5 in response to a signal indicative of the start of the maintenance operational phase of the aircraft. The signal indicative of the start of the maintenance operational phase of the aircraft is a signal that is output to the control unit 34 in response to a manual input of the maintenance or cleaning crew via the input unit 52.

The concentration of the distribution of the conditioned air to the aisle region 68 of the passenger cabin 60, during the maintenance operational phase of the aircraft, is achieved by suitably controlling the supply of conditioned air into the passenger cabin 60 via the air inlets 62. Specifically, under the control of the control unit 34, during the maintenance operational phase, the speed at which the conditioned air is ejected from the air inlets 62 and hence the impulse of the conditioned air is set to be lower than during normal operation of the aircraft. By reducing the speed and thus the impulse of the air blown into the passenger cabin 60, the formation of tumble air movements which provide for an even distribution of the conditioned air in the passenger cabin 60 is limited or even prevented. Hence, the distribution of the conditioned air supplied to the passenger cabin 60 is concentrated to the aisle region 68 of the passenger cabin 60. For example, if during normal operation of the aircraft conditioned air is supplied to the passenger cabin 60 at a speed of approx. 1.5 to 2.5 m/s and with a high impulse, during the maintenance operational phase of the aircraft said air speed to be reduced to 0.5 to 1.5 m/s. As a result, the impulse of the conditioned air injected into the passenger cabin is also reduced.

Further, if desired, the concentration of the distribution of the conditioned air to the aisle region 68 of the passenger cabin 60 may be supported by appropriately controlling an injection angle at which the conditioned air is injected into the passenger cabin 60. Specifically, the control unit 34 may control an orientation of the air inlets 62 such that the conditioned air is ejected from the air inlets 62 in the direction of the aisle region 68 of the passenger cabin 60.

Further, under the control of the control unit 34, during the maintenance operational phase of the aircraft, a lower amount of conditioned air may be supplied to the passenger cabin 60 than during normal operation of the aircraft. For example, if during normal operation of the aircraft a volume flow of conditioned air of 88 litre per meter cabin length is supplied to the passenger cabin 60, during the maintenance operational phase of the aircraft said conditioned air volume flow is reduced by 30 to 40 % to 53 to 62 litre per meter cabin length. A reduction of the amount of conditioned air supplied to the passenger cabin 60 may be achieved by reducing the amount of recirculation air supplied to the mixing chamber 26 of the aircraft air conditioning system 10 from the passenger cabin 60 by appropriately reducing the speed of the recirculation fans 30. Alternatively or additionally thereto, the amount of fresh air provided by the air conditioning unit 14 of the air conditioning system 10 and/or via the bypass line 22 to the mixing chamber 26 may be reduced.

During normal operation of the aircraft the temperature of the conditioned air supplied to the passenger cabin 60 should not fall below a predetermined threshold value so as to ensure a high air conditioning comfort in the passenger cabin 60. During the maintenance operational phase of the aircraft it is, however, not necessary that these comfort requirements are met. Therefore, during the maintenance operational phase of the aircraft, the conditioned air supplied to the passenger cabin 60 may be controlled, by the control unit 34, so as to have a lower temperature than during normal operation of the aircraft. This may be achieved by reducing the percentage of typically relatively warm recirculation air in the mixing chamber 26 by appropriately controlling the recirculation fans 30. Alternatively or additionally thereto, the temperature of the fresh air supplied to the mixing chamber 26 via the line 20 may be reduced. A reduction of the temperature of the air supplied to the mixing chamber 26 via the line 20 may be achieved by closing the bypass valve 24 or by increasing the cooling performance of the air conditioning unit 14. For example, if during normal operation of the aircraft the temperature of the conditioned air supplied to the passenger cabin 60 is 10 to 20°C, during the maintenance operational phase of the aircraft the temperature of the conditioned air supplied to the passenger cabin 60 is reduced to 3 to 8°C.

During the maintenance operational phase of the aircraft the supply of conditioned air to the passenger cabin 60 may be controlled in dependence on the air conditioning state in the aisle region 68 of the passenger cabin 60. For example, signals provided by suitable sensors, such as temperature sensors or pressure sensors disposed in the aisle region 68 of the passenger cabin 60 (not shown in the drawings), may be used upon controlling the supply of conditioned air to the passenger cabin 60.

## Claims

1. A method for controlling an aircraft air conditioning system (10), the method comprising the step:
- during normal operation of the aircraft, controlling the supply of conditioned air from the aircraft air conditioning system (10) to a cockpit or a passenger cabin (60) such that the conditioned air is evenly distributed in the cockpit or the passenger cabin (60),
**characterized in that** the method further comprises the step:
- during a maintenance operational phase of the aircraft, controlling the supply of conditioned air from the aircraft air conditioning system (10) to the cockpit or the passenger cabin (60) such that the distribution of the conditioned air is concentrated to a selected portion of the cockpit or the passenger cabin (60) which comprises an aisle region (68) of the cockpit or the passenger cabin (60) by setting the speed of the conditioned air supplied to the cockpit or the passenger cabin (60) to be lower than during normal operation of the aircraft.

2. The method according to claim 1,
wherein the control of the supply of conditioned air from the aircraft air conditioning system (10) to the cockpit or the passenger cabin (60) during the maintenance operational phase of the aircraft is initiated in response to a signal indicative of the start of the maintenance operational phase of the aircraft, said signal being output to the aircraft air conditioning system (10) in response to a manual input by a user and/or in response to the detection of selected operating parameters of the aircraft.

3. The method according to claim 1 or 2,
wherein conditioned air is supplied to the cockpit or the passenger cabin (60) via air inlets (62) which are arranged in a ceiling region of the cockpit or the passenger cabin (60), and which are adapted to blow out conditioned air substantially in a direction of a central region of the cockpit or the passenger cabin (60), and/or wherein air is discharged from the cockpit or the passenger cabin (60) via air outlets (64) which are arranged in a floor region of the cockpit or the passenger cabin (60).

4. The method according to any one of claims 1 to 3,
wherein, during normal operation of the aircraft, conditioned air is supplied to the cockpit or the passenger cabin (60) at a speed of approximately 1.5 to 2.5 m/s, and wherein, during the maintenance operational phase of the aircraft conditioned air is supplied to the cockpit or the passenger cabin (60) at a speed of approximately 0.5 to 1.5 m/s.

5. The method according to any one of claims 1 to 4,
wherein, during maintenance operational phase of the aircraft, a lower amount of conditioned air is supplied to the cockpit or the passenger cabin (60) than during normal operation of the aircraft.

6. The method according to any one of claims 1 to 5,
wherein, during the maintenance operational phase of the aircraft, conditioned air is supplied to the cockpit or the passenger cabin (60) at a lower temperature than during normal operation of the aircraft.

7. The method according to any one of claims 1 to 6,
wherein, during the maintenance operational phase of the aircraft, the supply of conditioned air to the cockpit or the passenger cabin (60) is controlled in dependence on the air conditioning state in the selected portion of the cockpit or the passenger cabin (60).

8. An aircraft air conditioning system (10) comprising a control unit (34) which is adapted to:
- during normal operation of the aircraft, control the supply of conditioned air from the aircraft air conditioning system (10) to a cockpit or a passenger cabin (60) such that the conditioned air is evenly distributed in the cockpit or the passenger cabin (60),
**characterized in that** the control unit is further adapted to:
- during a maintenance operational phase of the aircraft, control the supply of conditioned air from the aircraft air conditioning system (10) to the cockpit or the passenger cabin (60) such that the conditioned air is concentrated to a selected portion of the cockpit or the passenger cabin (60) which comprises an aisle region (68) of the cockpit or the passenger cabin (60) by setting the speed and thus the impulse of the conditioned air blown into the cockpit or the passenger cabin (60) to be lower than during normal operation of the aircraft.

9. The system according to claim 8,
wherein the control unit (34) is adapted to initiate the control of the supply of conditioned air from the aircraft air conditioning system (10) to the cockpit or the passenger cabin (60) during the maintenance operational phase of the aircraft in response to a signal indicative of the start of the maintenance operational phase of the aircraft, said signal being output to the aircraft air conditioning system (10) in response to a manual input by a user and/or in response to the detection of selected operating parameters of the aircraft.

10. The system according to claim 8 or 9,
further comprising
- air inlets (62) for supplying conditioned air to the cockpit or the passenger cabin (60), said air inlets (62) being arranged in a ceiling region of the cockpit or the passenger cabin (60), and being adapted to blow out conditioned air substantially in a direction of a central region of the cockpit or the passenger cabin (60), and/or
- air outlets (64) for discharging air from the cockpit or the passenger cabin (60), said air outlets (64) being arranged in a floor region of the cockpit or the passenger cabin (60).

11. The system according to claim 8 to 10,
wherein the control unit (34) is adapted to control the supply of conditioned air to the cockpit or the passenger cabin (60) such that, during normal operation of the aircraft, conditioned air is supplied to the cockpit or the passenger cabin (60) at a speed of approximately 1.5 to 2.5 m/s, and such that, during the maintenance operational phase of the aircraft conditioned air is supplied to the cockpit or the passenger cabin (60) at a speed of approximately 0.5 to 1.5 m/s.

12. The system according to any one of claims 8 to 11,
wherein the control unit (34) is adapted to control the supply of conditioned air to the cockpit or the passenger cabin (60) such that,
- during the maintenance operational phase of the aircraft, a lower amount of conditioned air is supplied to the cockpit or the passenger cabin (60) than during normal operation of the aircraft, and/or
- during the maintenance operational phase of the aircraft, conditioned air is supplied to the cockpit or the passenger cabin (60) at a lower temperature than during normal operation of the aircraft.

13. The system according to any one of claims 8 to 12,
wherein the control unit (34) is adapted to control the supply of conditioned air to the cockpit or the passenger cabin (60) during the maintenance operational phase of the aircraft in dependence on the air conditioning state in the selected portion of the cockpit or the passenger cabin (60).

## Patentansprüche

1. Verfahren zum Steuern eines Flugzeugklimatisierungssystems (10), wobei das Verfahren den Schritt aufweist von:
- Steuern der Zufuhr von konditionierter Luft von dem Flugzeugklimatisierungssystem (10) zu einem Cockpit oder einer Passagierkabine (60) während des Normalbetriebs des Flugzeugs derart, dass die konditionierte Luft gleichmäßig in dem Cockpit oder der Passagierkabine (60) verteilt wird,
**dadurch gekennzeichnet, dass** das Verfahren ferner den Schritt aufweist von:
- Steuern der Zufuhr konditionierter Luft von dem Flugzeugklimatisierungssystem (10) zu dem Cockpit oder der Passagierkabine (60) während einer Wartungsbetriebsphase des Flugzeugs derart, dass die Geschwindigkeit der konditionierten Luft, die dem Cockpit oder der Passagierkabine (60) zugeführt wird, niedriger als während des Normalbetriebs des Flugzeugs eingestellt wird, um die Verteilung konditionierter Luft auf einen ausgewählten Bereich des Cockpits oder der Passagierkabine (60) zu konzentrieren, der einen Gangbereich (68) des Cockpits oder der Passagierkabine (60) aufweist.

2. Verfahren nach Anspruch 1,
wobei die Steuerung der Zufuhr konditionierter Luft von dem Flugzeugklimatisierungssystem (10) zu dem Cockpit oder der Passagierkabine (60) während der Wartungsbetriebsphase des Flugzeugs in Antwort auf ein den Beginn der Wartungsbetriebsphase des Flugzeugs anzeigendes Signal initiiert wird, wobei das Signal in Antwort auf eine manuelle Eingabe durch einen Nutzer und/oder in Antwort auf die Erfassung eines ausgewählten Betriebsparameters des Flugzeugs zu dem Flugzeugklimatisierungssystem (10) ausgegeben wird.

3. Verfahren nach Anspruch 1 oder 2,
wobei konditionierte Luft dem Cockpit oder der Passagierkabine (60) über Lufteinlässe (62) zugeführt wird, die in einem Deckenbereich des Cockpits oder der Passagierkabine (60) angeordnet sind, und die zum Ausblasen konditionierter Luft im wesentlichen in Richtung eines zentralen Bereichs des Cockpits oder der Passagierkabine (60) ausgebildet sind, und/oder wobei Luft von dem Cockpit oder der Passagierkabine (60) über Luftauslässe (64) ausgelassen wird, die in einem Bodenbereich des Cockpits oder der Passagierkabine (60) angeordnet sind.

4. Verfahren nach einem der Ansprüche 1 bis 3,
wobei während des Normalbetriebs des Flugzeugs konditionierte Luft zu dem Cockpit oder der Passagierkabine (60) mit einer Geschwindigkeit von im wesentlichen 1,5-2,5 m/s zugeführt wird, und wobei während der Wartungsbetriebsphase des Flugzeugs konditionierte Luft zu dem Cockpit oder der Passagierkabine (60) mit einer Geschwindigkeit von im wesentlichen 0,5-1,5 m/s zugeführt wird.

5. Verfahren nach einem der Ansprüche 1 bis 4,
wobei während der Wartungsbetriebsphase des Flugzeugs ein geringerer Betrag von konditionierter Luft dem Cockpit oder der Passagierkabine (60) als während des Normalbetriebs des Flugzeugs zugeführt wird.

6. Verfahren nach einem der Ansprüche 1 bis 5,
wobei während der Wartungsbetriebsphase des Flugzeugs konditionierte Luft dem Cockpit oder der Passagierkabine (60) mit einer niedrigeren Temperatur als während der Normalbetriebs zugeführt wird.

7. Verfahren nach einem der Ansprüche 1 bis 6,
wobei während der Wartungsbetriebsphase des Flugzeugs die Zufuhr konditionierter Luft zu dem Cockpit oder der Passagierkabine (60) in Abhängigkeit des Luftklimatisierungszustands in dem ausgewählten Bereich des Cockpits oder der Passagierkabine (60) gesteuert wird.

8. Flugzeugklimatisierungssystem (10) umfassend eine Steuereinheit (34), die dazu ausgebildet ist:
- während des Normalbetriebs des Flugzeugs die Zufuhr konditionierter Luft von dem Flugzeugklimatisierungssystem (10) zu einem Cockpit oder einer Kasse Passagierkabine (60) derart zu steuern, dass die konditioniert die Luft gleichmäßig in dem Cockpit oder der Passagierkabine (60) verteilt wird,
**dadurch gekennzeichnet, dass** die Steuereinheit ferner dazu ausgebildet ist:
- während einer Wartungsbetriebsphase des Flugzeugs die Zufuhr konditionierter Luft von dem Flugzeugklimatisierungssystem (10) zu dem Cockpit oder der Passagierkabine (60) während einer Wartungsbetriebsphase des Flugzeugs derart zu steuern, dass die Geschwindigkeit und damit der Impuls der konditionierten Luft, die in das Cockpit oder die Passagierkabine (60) geblasen wird, niedriger als während des Normalbetriebs des Flugzeugs eingestellt wird, um die Verteilung konditionierter Luft auf einen ausgewählten Bereich des Cockpits oder der Passagierkabine (60), der einen Gangbereich (68) des Cockpits oder der Passagierkabine (60) aufweist.

9. System nach Anspruch 8,
wobei die Steuereinheit (34) dazu ausgebildet ist, die Steuerung der Zufuhr der konditionierten Luft von dem Flugzeugklimatisierungssystem (10) zu dem Cockpit oder der Passagierkabine (60) während der Wartungsbetriebsphase des Flugzeugs in Antwort auf ein den Beginn der Wartungsbetriebsphase des Flugzeugs anzeigendes Signal zu initiieren, wobei das Signal in Antwort auf eine manuelle Eingabe durch einen Nutzer und/oder in Antwort auf die Erfassung eines ausgewählten Betriebsparameters des Flugzeugs zu dem Flugzeugklimatisierungssystem (10) ausgegeben wird.

10. System nach Anspruch 8 oder 9,
ferner aufweisen
- Lufteinläse (62) zum Zuführen konditionierter Luft zu dem Cockpit oder der Passagierkabine (60), wobei die Lufteinläse (62) in einem Deckenbereich des Cockpits oder der Passagierkabine (60) angeordnet und zum Ausblasen konditionierter Luft im wesentlichen in Richtung eines zentralen Bereich des Cockpits oder der Passagierkabine (60) ausgebildet sind, und/oder
- Luftauslässe (64) zum Auslassen von Luft von dem Cockpit oder der Passagierkabine (60), wobei die Luftauslässe (64) in einem Bodenbereich des Cockpits oder der Passagierkabine (60) angeordnet sind.

11. System nach einem der Ansprüche 8 bis 10,
wobei die Steuereinheit (34) dazu ausgebildet ist, die Steuerung der Zufuhr der konditionierten Luft zu dem Cockpit oder der Passagierkabine (60) derart zu steuern, dass während des Normalbetriebs des Flugzeugs konditionierte Luft zu dem Cockpit oder der Passagierkabine (60) mit einer Geschwindigkeit von im Wesentlichen 1,5-2,5 m/s zugeführt wird, und derart, dass während der Wartungsbetriebsphase des Flugzeugs konditionierte Luft zu dem Cockpit oder der Passagierkabine mit einer Geschwindigkeit von 0,5-1,5 m/s zugeführt wird.

12. System nach einem der Ansprüche 8 bis 11,
wobei die Steuereinheit (34) dazu ausgebildet ist die Zufuhr der konditionierten Luft zu dem Cockpit oder der Passagierkabine (60) derart zu steuern, dass
- während der Wartungsbetriebsphase des Flugzeugs ein geringerer Betrag der konditionierten Luft als während des Normalbetriebs des Flugzeugs dem Cockpit oder der Passagierkabine (60) zugeführt wird, und/oder
- während der Wartungsbetriebsphase des Flugzeugs konditionierte Luft dem Cockpit oder der Passagierkabine (60) mit einer niedrigeren Temperatur als während der Normalbetriebs zugeführt wird.

13. System nach einem der Ansprüche 8 bis 12,
wobei die Steuereinheit (34) dazu ausgebildet ist, die Zufuhr der konditionierten Luft zu dem Cockpit oder der Passagierkabine (60) während der Wartungsbetriebsphase des Flugzeugs in Abhängigkeit des Luftkonditionierungszustands in dem ausgewählten Bereich des Cockpits oder der Passagierkabine (60) zu steuern.

## Revendications

1. Procédé de commande d'un système (10) de conditionnement d'air pour aéronef, le procédé comprenant l'étape consistant à :
- pendant le fonctionnement normal de l'aéronef, commander l'alimentation en air conditionné depuis le système (10) de conditionnement d'air pour aéronef vers un cockpit ou une cabine passagers (60) d'une manière telle que l'air conditionné est réparti de manière uniforme dans le cockpit ou la cabine passagers (60),
**caractérisé en ce que** le procédé comprend en outre l'étape consistant à :
- pendant une phase opérationnelle de maintenance de l'aéronef, commander l'alimentation en air conditionné depuis le système (10) de conditionnement d'air pour aéronef vers le cockpit ou la cabine passagers (60) d'une manière telle que la répartition de l'air conditionné est concentrée vers une partie sélectionnée du cockpit ou de la cabine passagers (60) qui comprend une région d'allée (68) du cockpit ou de la cabine passagers (60) en établissant la vitesse de l'air conditionné délivré vers le cockpit-ou la cabine passagers (60) inférieure à celle pendant le fonctionnement normal de l'aéronef.

2. Procédé selon la revendication 1,
dans lequel la commande de l'alimentation en air conditionné depuis le système (10) de conditionnement d'air pour aéronef vers le cockpit ou la cabine passagers (60) pendant la phase opérationnelle de maintenance de l'aéronef est lancée en réponse à un signal indiquant le début de la phase opérationnelle de maintenance de l'aéronef, ledit signal étant délivré en sortie vers le système (10) de conditionnement d'air pour aéronef en réponse à une entrée manuelle par un utilisateur et/ou en réponse à la détection de paramètres de fonctionnement sélectionnés de l'aéronef.

3. Procédé selon la revendication 1 ou 2,
dans lequel l'air conditionné est délivré vers le cockpit ou la cabine passagers (60) via des orifices d'entrée d'air (62) qui sont agencés dans une région de plafond du cockpit ou de la cabine passagers (60), et qui sont adaptés pour souffler l'air conditionné sensiblement en direction d'une région centrale du cockpit ou de la cabine passagers (60), et/ou dans lequel l'air est évacué du cockpit ou de la cabine passagers (60) via des orifices de sortie d'air (64) qui sont agencés dans une région de plancher du cockpit ou de la cabine passagers (60).

4. Procédé selon l'une quelconque des revendications 1 à 3,
dans lequel, pendant le fonctionnement normal de l'aéronef, l'air conditionné est délivré vers le cockpit ou la cabine passagers (60) à une vitesse d'approximativement 1,5 à 2,5 m/s, et dans lequel, pendant la phase opérationnelle de maintenance de l'aéronef, l'air conditionné est délivré vers le cockpit ou la cabine passagers (60) à une vitesse d'approximativement 0,5 à 1,5 m/s.

5. Procédé selon l'une quelconque des revendications 1 à 4,
dans lequel, pendant la phase opérationnelle de maintenance de l'aéronef, une quantité d'air conditionné plus faible est délivrée vers le cockpit ou la cabine passagers (60) que pendant un fonctionnement normal de l'aéronef.

6. Procédé selon l'une quelconque des revendications 1 à 5,
dans lequel, pendant la phase opérationnelle de maintenance de l'aéronef, l'air conditionné est délivré vers le cockpit ou la cabine passagers (60) à une température inférieure à celle pendant un fonctionnement normal de l'aéronef.

7. Procédé selon l'une quelconque des revendications 1 à 6,
dans lequel, pendant la phase opérationnelle de maintenance de l'aéronef, l'alimentation en air conditionné vers le cockpit ou la cabine passagers (60) est commandée en fonction de l'état de conditionnement d'air dans la partie sélectionnée du cockpit ou de la cabine passagers (60).

8. Système (10) de conditionnement d'air pour aéronef comprenant une unité de commande (34) qui est adaptée pour :
- pendant le fonctionnement normal de l'aéronef, commander l'alimentation en air conditionné depuis le système (10) de conditionnement d'air pour aéronef vers un cockpit ou une cabine passagers (60) d'une manière telle que l'air conditionné est réparti de manière uniforme dans le cockpit ou la cabine passagers (60),
**caractérisé en ce que** l'unité de commande est en outre adaptée pour :
- pendant une phase opérationnelle de maintenance de l'aéronef, commander l'alimentation en air conditionné depuis le système (10) de conditionnement d'air pour aéronef vers le cockpit ou la cabine passagers (60) d'une manière telle que l'air conditionné est concentré vers une partie sélectionnée du cockpit ou de la cabine passagers (60) qui comprend une région d'allée (68) du cockpit ou de la cabine passagers (60) en établissant la vitesse et ainsi l'impulsion de l'air conditionné soufflé dans le cockpit ou la cabine passagers (60) inférieure à celle pendant le fonctionnement normal de l'aéronef.

9. Système selon la revendication 8,
dans lequel l'unité de commande (34) est adaptée pour lancer la commande de l'alimentation en air conditionné depuis le système (10) de conditionnement d'air pour aéronef vers le cockpit ou la cabine passagers (60) pendant la phase opérationnelle de maintenance de l'aéronef en réponse à un signal indiquant le début de la phase opérationnelle de maintenance de l'aéronef, ledit signal étant délivré en sortie vers le système (10) de conditionnement d'air pour aéronef en réponse à une entrée manuelle par un utilisateur et/ou en réponse à la détection de paramètres de fonctionnement sélectionnés de l'aéronef.

10. Système selon la revendication 8 ou 9,
comprenant en outre
- des orifices d'entrée d'air (62) destinés à délivrer l'air conditionné vers le cockpit ou la cabine passagers (60), lesdits orifices d'entrée d'air (62) étant agencés dans une région de plafond du cockpit ou de la cabine passagers (60), et étant adaptés pour souffler l'air conditionné sensiblement en direction d'une région centrale du cockpit ou de la cabine passagers (60), et/ou
- des orifices de sortie d'air (64) destinés à évacuer l'air du cockpit ou de la cabine passagers (60), lesdits orifices de sortie d'air (64) étant agencés dans une région de plancher du cockpit ou de la cabine passagers (60).

11. Système selon les revendications 8 à 10,
dans lequel l'unité de commande (34) est adaptée pour commander l'alimentation en air conditionné vers le cockpit ou la cabine passagers (60) d'une manière telle que, pendant le fonctionnement normal de l'aéronef, l'air conditionné est délivré vers le cockpit ou la cabine passagers (60) à une vitesse d'approximativement 1,5 à 2,5 m/s, et d'une manière telle que, pendant la phase opérationnelle de maintenance de l'aéronef, l'air conditionné est délivré vers le cockpit ou la cabine passagers (60) à une vitesse d'approximativement 0,5 à 1,5 m/s.

12. Système selon l'une quelconque des revendications 8 à 11,
dans lequel l'unité de commande (34) est adaptée pour commander l'alimentation en air conditionné vers le cockpit ou la cabine passagers (60) d'une manière telle que,
- pendant la phase opérationnelle de maintenance de l'aéronef, une quantité d'air conditionné plus faible est délivrée vers le cockpit ou la cabine passagers (60) que pendant un fonctionnement normal de l'aéronef, et/ou
- pendant la phase opérationnelle de maintenance de l'aéronef, l'air conditionné est délivré vers le cockpit ou la cabine passagers (60) à une température inférieure à celle pendant un fonctionnement normal de l'aéronef.

13. Système selon l'une quelconque des revendications 8 à 12,
dans lequel l'unité de commande (34) est adaptée pour commander l'alimentation en air conditionné vers le cockpit ou la cabine passagers (60) pendant la phase opérationnelle de maintenance de l'aéronef en fonction de l'état de conditionnement d'air dans la partie sélectionnée du cockpit ou de la cabine passagers (60).
